Europäisches Patentamt

European Patent Office

Office européen des brevets

(19)

(11) Veröffentlichungsnummer: **0 356 791**
**B1**

(12) **EUROPÄISCHE PATENTSCHRIFT**

(45) Veröffentlichungstag der Patentschrift: **23.01.91**

(51) Int. Cl.⁵: **B 60 S 1/08, H 02 K 5/14**

(21) Anmeldenummer: **89114903.1**

(22) Anmeldetag: **11.08.89**

(54) **Antrieb, insbesondere für Scheibenwischeranlagen an Kraftfahrzeugen.**

(30) Priorität: **19.08.88 DE 3828176**

(43) Veröffentlichungstag der Anmeldung:
**07.03.90 Patentblatt 90/10**

(45) Bekanntmachung des Hinweises auf die
Patenterteilung:
**23.01.91 Patentblatt 91/04**

(84) Benannte Vertragsstaaten:
**ES FR GB IT SE**

(56) Entgegenhaltungen:
**EP-A-0 072 283**
**EP-A-0 076 206**
**DE-A-3 719 777**
**GB-A-2 178 248**

(73) Patentinhaber: **SWF Auto-Electric GmbH**
**Stuttgarter Strasse 119 Postfach 135**
**D-7120 Bietigheim-Bissingen (DE)**

(72) Erfinder: **Gakenholz, Werner**
**Beethovenstrasse 17**
**D-7120 Bietigheim-Bissingen (DE)**

Courier Press, Leamington Spa, England.

EP 0 356 791 B1

**Beschreibung**

Die Erfindung bezieht sich auf einen Antrieb, der insbesondere für Scheibenwischeranlagen an Kraftfahrzeugen vorgesehen ist und die Merkmale aus dem Oberbegriff des Anspruchs 1 aufweist.

Die Scheibenwischeranlagen moderner Kraftfahrzeuge werden überwiegend von einem permanentmagneterregten Gleichstrommotor angetrieben, der in zwei unterschiedlichen Drehzahlstufen betreibbar ist. Zur Einstellung der beiden unterschiedlichen Drehzahlstufen sind insgesamt drei Schleifbürsten vorgesehen, von denen zwei im wesentlichen diametral gegenüberliegend am Kollektor anliegen. Eine dieser Schleifbürsten ist mit dem Massepol einer Spannungsquelle verbunden. Die andere dieser beiden Schleifbürsten wird an den positiven Pol der Spannungsquelle gelegt, wenn der Gleichstrommotor in der ersten Drehzahlstufe mit niedriger Drehzahl betrieben werden soll. Die dritte Schleifbürste liegt, um einen bestimmten Winkel, der im allgemeinen nicht größer als 90° ist, gegenüber der mit dem positiven Pol verbindbaren Schleifbürste der ersten Drehzahlstufe versetzt, zwischen der ersten und der zweiten Schleifbürste am Kollektor an. Zum Betreiben des Gleichstrommotors in der zweiten Drehzahlstufe mit einer höheren Drehzahl ist anstelle der zweiten Schleifbürste die dritte Schleifbürste mit dem positiven Pol einer Spannungsquelle verbunden (siehe z.B. EP—A—0 076 206).

Es ist auch eine Wischenlage bekannt, bei der der Gleichstrommotor in drei unterschiedlichen Drehzahlstufen betreibbar ist. Bei dieser bekannten Ausführung sind auf der einen Seite der neutralen Zone, die durch die Verbindungslinie der beiden in der Drehzahlstufe mit der geringsten Drehzahl mit der Spannungsquelle verbundenen Schleifbürsten festgelegt ist, zwei weitere Schleifbürsten angeordnet, so daß insgesamt drei Schleifbürsten selektiv mit dem positiven Pol der Spannungsquelle verbindbar sind.

Solche Ausführungen haben im Vergleich mit anderen Lösungen, bei denen unterschiedliche Drehzahlen durch veränderbare Vorwiderstände oder eine veränderbare Ankerspannung eingestellt werden, erhebliche Kostenvorteile.

Allerdings ist das Anzugsmoment des Gleichstrommotors umso geringer, je höher die Leerlaufdrehzahl der gewählten Drehzahlstufe ist.

Es ist bekannt, zur Umgehung dieses Nachteils zwischen die Schleifbürste der niedrigsten Drehzahlstufe und die Schleifbürste einer höheren Drehzahlstufe eine Diode einzuschleifen, die einen Stromfluß von der Zuleitung der Schleifbürste für die höhere Drehzahlstufe zur Schleifbürste für die niedrigste Drehzahlstufe ermöglicht. Diese Lösung ist jedoch relativ teuer. Außerdem ist es schwierig, die an der Diode entstehende Wärme abzuführen.

Der Erfindung liegt die Aufgabe zugrunde, einen Antrieb der eingangs erwähnten Art so auszubilden, daß mit einfachen Mitteln in der Drehzahlstufe mit der höheren Drehzahl ein Anzugsmoment des Gleichstrommotors erhalten wird, das wenigstens annähernd so groß oder größer als das Anzugsmoment in der Drehzahlstufe mit der kleineren Drehzahl ist.

Diese Aufgabe wird erfindungsgemäß dadurch gelöst, daß ein Antrieb mit den Merkmalen aus dem Oberbegriff zusätzlich mit den Merkmalen aus dem kennzeichnenden Teil des Anspruchs 1 ausgestattet ist. Es hat sich gezeigt, daß bei einem erfindungsgemäßen Antrieb das Anzugsmoment in der höheren Drehzahlstufe wesentlich höher als bei herkömmlichen Antrieben ist. Es kann sogar höher als in der Drehzahlstufe mit der niedrigeren Drehzahl sein.

Vorteilhafte Ausgestaltungen eines erfindungsgemäßen Antriebs kann man den Unteransprüchen entnehmen.

So kann es z.B. vorteilhaft sein, daß die dritte und die vierte Schleifbürste unterschiedlich stark gegenüber der zweiten Schleifbürste versetzt sind. Auf diese Weise läßt sich unter Umständen eine bessere Symmetrie der sich an den dem Kollektor zugewandten Stirnflächen der dritten und vierten Schleifbürste ergebenden Gleitflächen zwischen diesen Schleifbürsten und dem Kollektor bezüglich der zweiten Schleifbürste herstellen. Den Versatz wird man zweckmäßigerweise höchstens so groß machen, daß die nachlaufende Kante der dritten Schleifbürste genauso stark gegenüber der zweiten Schleifbürste versetzt ist wie die nachlaufende Kante der vierten Schleifburste.

Insbesondere bei Antrieben, bei denen der Gleichstrommotor in unterschiedliche Drehrichtungen ansteuerbar ist, ist es jedoch vorteilhaft, daß die dritte und vierte Schleifbürste um denselben Winkel gegenüber der zweiten Schleifbürste versetzt sind. Sind die Gleitverhältnisse zwischen der zweiten Bürste und dem Kollektor sowie zwischen der dritten und vierten Bürste und dem Kollektor weitgehend gleich, so erhält man auch bei gleichem Winkelversatz der dritten und vierten Schleifbürste eine Symmetrie bezüglich der zweiten Schleifbürste.

Durch ein der dritten und/oder der vierten Schleifbürste vorgeschaltetes elektrisches Bauelement mit einem kleinen elektrischen Widerstand kann das Anzugsmoment in der höheren Drehzahlstufe auf einen gewünschten Wert, z.B. auf den Wert der niedrigeren Drehzahlstufe eingestellt werden. Außerdem lassen sich dadurch Ausgleichströme zwischen der dritten und vierten Schleifbürste beeinflussen.

Der Einsatz von zwei Schleifbürsten für die gleiche Drehzahlstufe kann dazu führen, daß die Blockierzeit des Gleichstrommotors in dieser Drehzahlstufe zu gering wird. Deshalb ist gemäß Anspruch 6 vorgesehen, daß entweder die dritte oder die vierte Schleifbürste automatisch abschaltbar ist, wenn der Gleichstrommotor in der zweiten Drehzahlstufe mit der höheren Drehzahl blockiert ist. Dazu wird auf einfache Weise der abschaltbaren Schleifbürste ein insbesondere thermisch auslösbares Schaltelement vorgeschaltet.

Die dritte und die vierte Schleifbürste können auch direkt miteinander verbunden sein.

Da der beim Betrieb des Gleichstrommotors in der höheren Drezahlstufe durch die dritte und vierte Schleifbürste fließende Gesamtstrom nicht sehr viel höher ist als der Strom, der in der niedrigeren Drehzahlstufe durch die zweite Schleifbürste fließt, können die dritte und die vierte Schleifbürste in Umfangsrichtung des Kollektors schmaler sein als die erste und die zweite Schleifbürste.

Kann der Gleichstrommotor in mehr als zwei Drehzahlstufen betrieben werden, so sind vorteilhafterweise für jede weitere Drehzahlstufe zwei weitere auf gegenüberliegenden Seiten der Verbindungslinie zwischen der ersten und zweiten Schleifbürste am Kollektor anliegende, um einen anderen Winkel als die dritte und vierte Schleifbürste bezüglich der zweiten Schleifbürste versetzte Schleifbürsten vorhanden, die parallel und gemeinsam an die Spannungsquelle anschließbar sind.

Mehrere Ausführungsbeispiele eines erfindungsgemäßen Antriebs sind in den Zeichnungen dargestellt. Anhand der Figuren dieser Zeichnungen wird die Erfindung nun näher erläutert.

Es zeigen

Fig. 1 einen Antrieb mit einem Gleichstrommotor mit zwei Drehzahlstufen, bei dem die dritte und vierte Schleifbürste um unterschiedliche Winkel gegenüber der zweiten Schleifbürste versetzt sind,

Fig. 2 eine zweite Ausführung mit gleichem Winkelversatz der dritten und vierten Schleifbürste und einem Schaltelement in der Zuleitung zu einer dieser beiden Bürsten,

Fig. 3 eine Ausführung ähnlich der aus Fig. 2 mit einem Thermoschalter in der Zuleitung zu einer der beiden Schleifbürsten,

Fig. 4 eine Ausführung, bei der die dritten und die vierten Schleifbürsten schmäler als die anderen Schleifbürsten sind,

Fig. 5 eine Ausführung mit drei Drehzahlstufen und

Fig. 6 das Motordiagramm eines erfindungsgemäßen Antriebs.

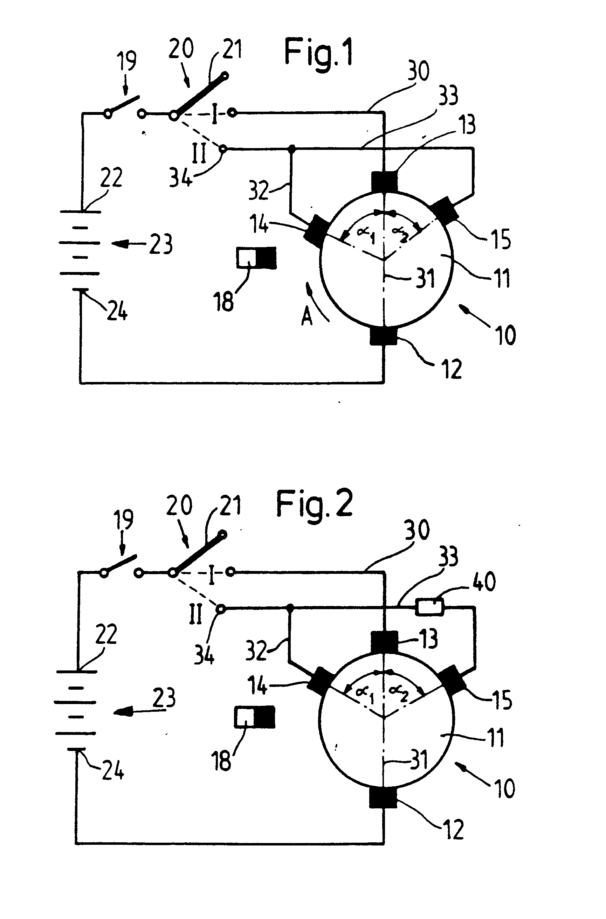

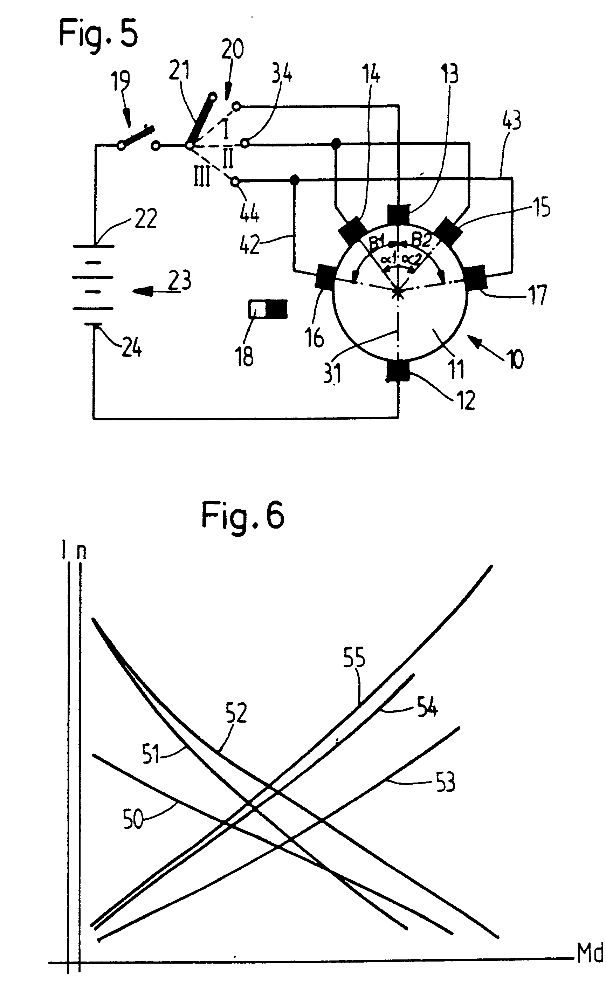

Die Fig. 1 bis 5 zeigen Antriebe für Scheibenwischeranlagen an Kraftfahrzeugen. Zu den Antrieben gehört ein Gleichstrommotor 10, von dem in den Fig. der Kollektor 11 angedeutet ist, auf dessen Umfangsfläche bei den Ausführungen nach den Fig. 1 bis 4 die Schleifbürsten 12, 13, 14 und 15 und bei der Ausführung nach Fig. 5 zusätzlich noch die Schleifbürsten 16 und 17 aufliegen. Durch den Magneten 18 ist angedeutet, daß es sich bei dem Gleichstrommotor 10 um einen permanenterregten Motor handelt. Der Motor 10 kann in mehreren Drehzahlstufen betrieben werden. Zur Ansteuerung des Motors 10 und zur Auswahl einer Drehzahlstufe dient ein Betriebsschalter 20 mit einer beweglichen Kontaktbrücke 21, die über einen Zündschalter 19 mit dem positiven Pol 22 einer Spannungsquelle 23 elektrisch leitend verbindbar ist, deren andere Pol 24 der Masssepol ist.

Aus den Fig. ist ersichtlich, daß die Schleifbürste 12 dauernd und unveränderbar an den Massepol 24 angeschlossen ist. Wird der Betriebsschalter, ausgehend von der dargestellten Ausschaltstellung, in die mit I bezeichnete erste Betriebsschaltstellung umgestellt, so wird bei geschlossenem Zünschalter über die bewegliche Kontaktbrücke 21 und eine Leitung 30 positives Potential an die Schleifbürste 13 gelegt, die bezüglich des Kollektors 11 der Schleifbürste 12 diametral gegenüberliegt. Die Verbindungslinie zwischen den Schleifbürsten 12 und 13 ist strichpunktiert eingezeichnet und trägt die Bezugszahl 31. Wird der Gleichstrommotor 10 über die zweite Schleifbürste 13 angesteuert, so dreht sich der Anker des Gleichstrommotors 10 in der niedrigsten Drehzahlstufe.

Die Schleifbürste 14 ist gegenüber der Schleifbürste 13 um einen Winkel α1 versetzt zwischen den beiden Schleifbürsten 12 und 13 angeordnet. Die vierte Schleifbürste 15 liegt, gegenüber der dritten Schleifbürste betrachtet, auf der anderen Seite der Verbindungslinie 31 und ist um einen Winkel α2 gegenüber der Schleifbürste 13 versetzt. Die beiden Schleifbürsten 14 und 15 sind über Zuleitungen 32 und 33 mit demselben Festkontakt 34 des Betriebsschalters 20 verbunden.

Wird die bewegliche Kontaktbrücke 21 des Betriebsschalters 20 in die Betriebsschaltstellung II umgestellt, so sind bei geschlossenem Zündschalter 19 die beiden Schleifbürsten 14 und 15 parallel zueinander und gemeinsam an den positiven Pol 22 der Spannungsquelle 23 angeschlossen. Der Anker des Gleichstrommotors 10 dreht sich dann mit einer höheren Drehzahl als in der Drehzahlstufe I. Durch die gewählte Anordnung der Schleifbürsten 14 und 15 und deren gemeinsame Ansteuerung wird erreicht, daß das Anzugsmoment des Gleichstrommotors 10 in dieser höheren Drehzahlstufe größer ist als in der niedrigeren Drehzahlstufe.

Bei der Ausführung nach Fig. 1 sind die beiden Winkel α1 und α2 um ein solches Maß unterschiedlich, daß die bei Drehung des Kollektors in Richtung des Pfeiles A nachlaufenden Kanten der Schleifbürsten 14 und 15 gleich weit von der Schleifbürste 13 entfernt sind.

Während bei der Ausführung nach Fig. 1 die Schleifbürsten 14 und 15 über ihre Zuleitungen 32 und 33 direkt miteinander verbunden sind, ist bei der Ausführung nach Fig. 2 in die Zuleitung zur Schleifbürste 15 ein elektrisches Bauelement 40 mit einem kleinem elektrischen Widerstand eingeschleift. Mit diesem Bauelement 40 kann das Anzugsmoment des Gleichstrommotors 10 in der Drehzahlstufe II eingestellt werden. Außerdem können Ausgleichsströme zwischen den Schleifbürsten 14 und 15 beeinflußt werden. Im übrigen sind bei der Ausführung nach Fig. 2 die Winkel 1 und 2 gleich groß. Diese völlig symmetrische Anordnung der Schleifbürsten 14 und 15 bezüglich der Verbindungslinie 31 ist besonders dann vorteilhaft, wenn der Gleichstrommotor 10 in beide Drehrichtungen antreibbar ist.

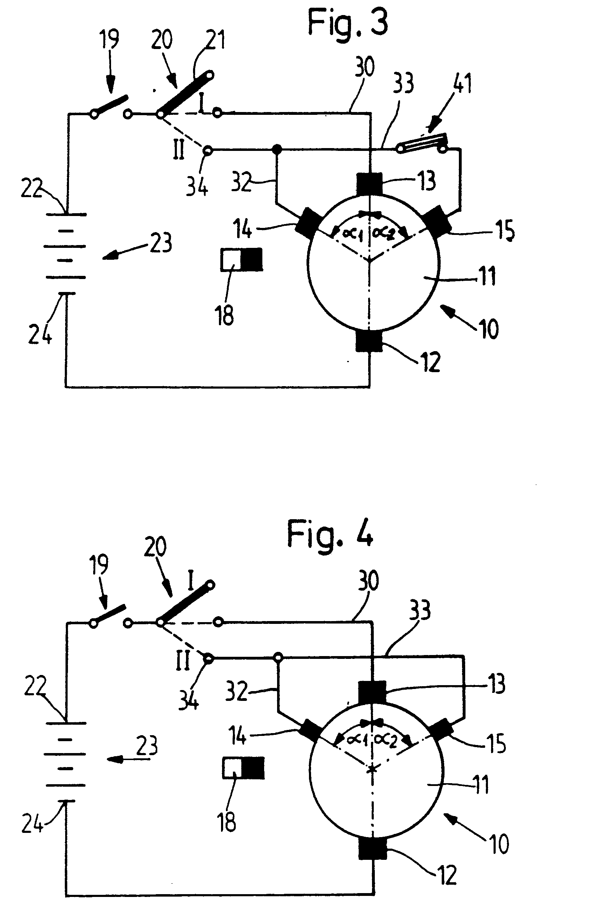

Die Ausführung nach Fig. 3 unterscheidet sich von der nach Fig. 2 dadurch, daß in die Zuleitung 33 zur Schleifbürste 15 nun ein Thermoschalter eingeschleift ist. Damit kann auch hohen Anforderungen an die Blockiersicherheit des Gleichstrommotors 10 Rechnung getragen werden. Da die Höhe des Stroms, die durch die Schleifbürste 14 bzw. 15 fließt, nur die Hälfte des Stroms durch die Schleifbürste 12 beträgt, kann ein relativ billiger Thermoschalter verwendet werden. Der Thermoschalter 41 könnte sich auch in der Zuleitung 32 zur Schleifbürste 14 befinden.

Der geringere Strom durch die beiden Schleifbürsten 14 und 15 ermöglicht es auch, diese, wie bei der Ausführung nach Fig. 4 geschehen, in Umfangsrichtung des Kollektors 11 schmäler zu machen als die Schleifbursten 12 und 13. Dies wirkt sich vorteilhaft auf die Kommutierung des Stromes aus.

Der Gleichstrommotor 10 des in Fig. 5 dargestellten Antriebs einer Scheibenwischeranlage kann in drei Drehzahlstufen betrieben werden. Er besitzt neben den Bürsten 12, 13, 14 und 15 zwei weitere Bpürsten 16 und 17, die ebenfalls auf gegenüberliegenden Seiten der Verbindungslinie 31 zwischen den beiden Schleifbürsten 12 und 13 am Kollektor anliegen undum einen größeren Winkel gegenüber der Schleifbürste 13 versetzt sind als die Schleifbürsten 14 und 15. Über Zuleitungen 42 und 43 sind die beiden Bürsten 16 und 17 gemeinsam an einen zusätzlichen Festkontakt 44 des Betriebsschalters 20 angeschlossen, der nun drei Betriebsschaltstellungen aufweist. Wenn bei eingeschaltetem Zündschalter 19 die bewegliche Kontaktbrücke 21 des Betriebsschalters 20 auf den Festkontakt 44 umgelegt wird, sind die beiden Schleifbürsten 16 und 17 parallel zueinander und gemeinsam an den positiven Pol 22 der Spannungsquelle 23 angeschlossen. Der Motor 10 wird dann in einer Drehzahlstufe III betrieben, in der die Drehzahlen höher sind als in den Drehzahlstufen I und II.

In Fig. 6 sind die Motordiagramme eines Gleichstrommotors eines herkömmlichen Antriebs und eines erfindungsgemäßen Antriebs gezeigt. Die Kennlinie 50 zeigt den Zusammenhang zwischen der Motordrehzahl und dem Drehmoment in der Drehzahlstufe I. Diese Kennlinie ist für einen herkömmlichen und einen erfindungsgemäßen Antrieb dieselbe. Die Kennlinie 51 zeigt den Zusammenhang zwischen der Motordrehzahl und dem Drehmomnet für den Motor eines hermömmlichen Antriebs beim Betrieb in der Drehzahlstufe II. Man erkennt, daß in der Drehzahlstufe II die Leelaufdrehzahl höher ist als in der Drehzahlstufe I, daß jedoch das Anzugsmoment geringer geworden ist.

Die Kennlinie 52 zeigt den Zusammenhang zwischen der Motordrehzahl und dem Motordrehmoment für einen in der Drehzahlstufe II betriebenen Gleichstrommotor eines erfindungsgemäßen Antriebs mit zwei in dieser Drehzahlstufe an den Pluspol der Spannungsquelle angeschlossenen Schleifbürsten. Man erkennt, daß das Anzugsmoment des Motors in der Drehzahlstufe II nun höher ist als in der Drehzahlstufe I.

Die Kennlinie 53 zeigt, den Strom-/ Drehmoment-Zusammenhang für den Betrieb eines herkömmlichen oder eines erfindungsgemäßen Gleichstrommotors beim Betrieb in der Drehzahlstufe I. Die Kennlinie 54 bezieht sich auf den Strom-/ Drehmoment-Zusammenhang eines herkömmlichen Gleichstrommotors beim Betrieb in Stufe II, und die Kennlinie 55 auf den Strom-/ Drehmoment-Zusammenhang eines erfindungsgemäßen Gleichstrommotors in der Drehzahlstufe II. Man sieht, daß der Strom, der von einem Gleichstrommotor eines erfindungsgemäßen Antriebs in der Drehzahlstufe II gezogen wird, nur wenig größer ist als der Strom, der durch den Gleichstrommotor eines herkömmlichen Antriebs beim Betrieb in der Drehzahlstufe II fließt.

**Patentansprüche**

1. Antrieb, insbesondere für Scheibenwischeranlagen an Kraftfahrzeugen, mit einem in wenigstens zwei unterschiedlichen Drehzahlstufen betriebbaren Gleichstrommotor (10) mit einem Kollektor (11), mit einer ersten und einer zweiten Schleifbürste (12, 13), die im wesentlichen diametral gegenüberliegend am Kollektor (11) anliegen, und mit einer dritten Schleifbürste (14), die, um einen bestimmten Winkel zur zweiten Schleifbürste (13) versetzt, zwischen der ersten und der zweiten Schleifbürste (12, 13) am Kollektor (11) anliegt, wobei beim Betrieben des Gleichstrommotors (10) in der ersten Drehzahlstufe (I) die erste und zweite Schleifbürste (12, 13) und beim Betreiben des Gleichstrommotors (10) in der zweiten Drehzahlstufe (II) die erste und dritte Schleifbürste (12, 14) an eine Spannungsquelle (23) angeschlossen sind, gekennzeichnet durch eine vierte Schleifbürste (15), die gegenüber der dritten Schleifbürste (14) betrachtet, auf der anderen Seite der Verbindungslinie (31) zwischen der ersten und zweiten Schleifbürste (12, 13) am Kollektor (11) anliegt und parallel zur und gemeinsam mit der dritten Schleifbürste (14) an die Spannungsquelle (23) anschließbar ist.

2. Antrieb nach Anspruch 1, dadurch gekennzeichnet, daß die dritte Schleifbürste (14) und die vierte Schleifbürste (15) unterschiedlich stark gegenüber der zweiten Schleifbürste (13) versetzt sind.

3. Antrieb nach Anspruch 2, dadurch gekennzeichnet, daß der Versatz höchstens so groß ist, daß die nachlaufende Kante der dritten Schleifbürste (14) genauso stark gegenüber der zweiten Schleifbürste (13) versetzt ist wie die nachlaufende Kante der vierten Schleifbürste (15).

4. Antrieb nach Anspruch 1, dadurch gekennzeichnet, daß die dritte und vierte Schleifbürste (14, 15) um denselben Winkel gegenüber der zweiten Schleifbürste (13) versetzt sind.

5. Antrieb nach einem der Ansprüche 1 bis 4, dadurch gekennzeichnet, daß der dritten und/ oder der vierten Schleifbürste (14, 15) ein elektrisches Bauelement (40, 41) mit einem kleinen elektrischen Widerstand vorgeschaltet ist.

6. Antrieb nach einem der Ansprüche 1 bis 5,

EP 0 356 791 B1

dadurch gekennzeichnet, daß entweder die dritte oder die vierte Schleifbürste (14, 15) automatisch abschaltbar ist, wenn der Gleichstrommotor (10) in der zweiten Drehzahlstufe (II) blockiert ist.

7. Antrieb nach Anspruch 6, dadurch gekennzeichnet, daß der abschaltbaren Schleifbürste (15) ein insbesondere thermisch auslösbares Schaltelement (41) vorgeschaltet ist.

8. Antrieb nach einem der Ansprüche 1 bis 4, dadurch gekennzeichnet, daß die dritte und vierte Schleifbürste (14, 15) direkt miteinander verbunden sind.

9. Antrieb nach einem der Ansprüche 1 bis 8, dadurch gekennzeichnet, daß die dritte und die vierte Schleifbürste (14, 15) in Umfangsrichtung des Kollektors (11) schmaler sind als die erste und die zweite Schleifbürste (12, 13).

10. Antrieb nach einem der Ansprüche 1 bis 9, dadurch gekennzeichnet, daß für eine weitere Drehzahlstufe (III) zwei weitere auf gegenüberliegenden Seiten der Verbindungslinie (31) zwischen der ersten und zweiten Schleifbürste (12, 13) am Kollektor (11) anliegende, um einen anderen Winkel als die dritte und vierte Schleifbürste (14, 15) bezüglich der zweiten Schleifbürste (13) versetzte Schleifbürsten (16, 17) vorhanden sind, die parallel und gemeinsam an die Spannungsquelle (23) anschließbar sind.

## Revendications

1. Entraînement, notamment pour des systèmes essuie-glaces de véhicules automobiles, avec un moteur à courant continu (10) qui peut fonctionner à au moins deux vitesses différentes et qui est muni d'un collecteur (11), d'un premier et d'un deuxième balais frotteurs (12, 13) appliquées sensiblement diamétralement en vis-à-vis sur le collecteur (11), et d'un troisième balai frotteur (14) appliqué entre le premier et le deuxième balais frotteurs (12, 13) sur le collecteur (11) en étant décalé d'un angle donné par rapport au deuxième balai frotteur (13), le premier et le deuxième balais frotteurs (12, 13) étant raccordés à une source de tension (23) lorsque le moteur à courant continu (10) fonctionne à la première vitesse (I), et le premier et le troisième balais frotteurs (12, 14) étant raccordés à la source de tension (23) lorsque le moteur (10) fonctionne à la deuxième vitesse (II), caractérisé par un quatrième balai frotteur (15) qui, observé par rapport au troisième balai frotteur (14), est appliqué sur le collecteur (11) de l'autre côté de la ligne de jonction (31) entre le premier et le deuxième balais frotteurs (12, 13) et qui peut être raccordé à la source de tension (23) parallèlement au troisième balai frotteur (14) et conjointement avec ce dernier.

2. Entraînement selon la revendication 1, caractérisé en ce que le troisième balai frotteur (14) et le quatrième balai frotteur (15) sont décalés de valeurs différentes par rapport au deuxième balai frotteur (13).

3. Entraînement selon la revendication 2, caractérisé en ce que le décalage est au plus d'une valeur telle que le bord arrière du troisième balai frotteur (14) est décalé exactement de la même valeur par rapport au deuxième balai frotteur (13) que le bord arrière du quatrième balai frotteur (15).

4. Entraînement selon la revendication 1, caractérisé en ce que le troisième et le quatrième balais frotteurs (14, 15) sont décalés du même angle par rapport au deuxième balai frotteur (13).

5. Entraînement selon l'une des revendications 1 à 4, caractérisé en ce qu'un composant électrique (40, 41) de faible résistance électrique est branché en amont du troisième et/ou du quatrième balai frotteur (14, 15).

6. Entraînement selon l'une des revendications 1 à 5, caractérisé en ce que soit le troisième soit le quatrième balai frotteur (14, 15) peut être automatiquement déconnecté si le moteur à courant continu (10) est bloqué à la deuxième vitesse (II).

7. Entraînement selon la revendication 6, caractérisé en ce qu'un élément de commutation (41), qui peut notamment être déclenché thermiquement, est branché en série avec le balai frotteur déconnectable (15).

8. Entraînement selon l'une des revendications 1 à 4, caractérisé en ce que le troisième et le quatrième balais frotteurs (14, 15) sont directement reliés l'un à l'autre.

9. Entraînement selon l'une des revendications 1 à 8, caractérisé en ce que le troisième et le quatrième balais frotteurs (14, 15) sont, dans le sens circonférentiel du collecteur (11), plus étroits que le premier et le deuxième balais frotteurs (12, 13).

10. Entraînement selon l'une des revendications 1 à 9, caractérisé en ce que, pour une vitesse supplémentaire (III), il est prévu deux balais frotteurs supplémentaires (16, 17), qui peuvent être raccordés parallèlement et conjointement à la source de tension (23), qui sont appliqués sur le collecteur (11) sur des côtés opposés de la ligne de jonction (31) entre le premier et le deuxième balais frotteurs (12, 13) et que sont décalés par rapport au deuxième balai frotteur (13) d'un autre angle que le troisième et le quatrième balais frotteurs (14, 15).

## Claims

1. A drive mechanism, especially for windshield wipers on motor vehicles comprising a d.c. motor (10) which may be driven in at least two different speeds of operation, which d.c. motor comprises a collector (11), a first and a second carbon brush (12, 13) resting against the collector (11) substantially diametrical to each other, and a third carbon brush (14) which, set off relative to the second carbon brush (13) at a defined angle, rests against the collector (11) between the first and second carbon brush, wherein, when the d.c. motor (10) is operated with the first speed of operation (I) the first and the second carbon brush (12, 13) are connected to a voltage source (23) and, when the d.c. motor (10) is operated in the second speed of operation (II) the first and the third carbon brush (12, 14) are connected to said voltage source, characterized by a fourth carbon brush (15) which, relative to the third carbon brush (14) rests against the collector (11) at the other side of the connecting line (31) between the first and second carbon brush (12, 13) and may be connected to the voltage source (23) in parallel to and jointly with the third carbon brush (14).

2. A drive mechanism according to Claim 1, characterized in that the third carbon brush (14) and the fourth carbon brush (15) are set off to a different extent relative to the second carbon brush (13).

3. A drive mechanism according to Claim 2, characterized in that the displacement is at most as large that the after-running edge of the third carbon brush (14) is set off relative to the second carbon brush (13) to the same extent as the after-running edge of the fourth carbon brush (15).

4. A drive mechanism according to Claim 1, characterized in that the third and the fourth carbon brush (14, 15) are set off relative to the second carbon brush (13) at the same angle.

5. A drive mechanism according to one of Claims 1 to 4, characterized in that an electric component (40, 41) with a low electric resistance is series-connected to the third and/or the fourth carbon brush (14, 15).

6. A drive mechanism according to one of the Claims 1 to 5, characterized in that either the third or the fourth carbon brush (14, 15) may be automatically switched off, when the d.c. motor (10) is blocked in the second speed of operation (II).

7. A drive mechanism according to Claim 6, characterized in that a switching element (41) which may be thermally operated is series-connected to the disconnectable carbon brush (15).

8. A drive mechanism according to one of Claims 1 to 4, characterized in that the third and fourth carbon brush (14, 15) are directly interconnected.

9. A drive mechanism according to one of Claims 1 to 8, characterized in that the third and the fourth carbon brush (14, 15) is narrower in the circumferential direction of the collector (11) than the first and the second carbon brush (12, 13).

10. A drive mechanism according to one of Claims 1 to 9, characterized in that for a further speed of operation (III) there are provided two further carbon brushes (16, 17) resting against the collector (11) at opposite sides of the connecting line (31) between the first and the second carbon brush (12, 13), which carbon brushes (16, 17) are set off relative to the second carbon brush (13), at another angle than the third and the fourth carbon brush (14, 15) and may be connected in parallel and jointly to the voltage source (23).

EP 0 356 791 B1

Fig.1

Fig.2

Fig. 3

Fig. 4

2

# Fig. 5

# Fig. 6